# EUROPEAN PATENT SPECIFICATION

(11) **EP 3 833 116 B1**
(45) Date of publication and mention of the grant of the patent: **01.10.2025**
(21) Application number: 19855247.3
(22) Date of filing: 22.08.2019
(51) Int. Cl.: H04W 52/02, H04W 36/08, H04W 36/32, H04W 4/02, H04W 36/38, H04W 36/30, H04W 36/00

(54) **METHOD AND APPARATUS FOR COMMUNICATION BETWEEN TERMINAL AND BASE STATION, DEVICE, AND STORAGE MEDIUM**
VERFAHREN UND VORRICHTUNG ZUR KOMMUNIKATION ZWISCHEN ENDGERÄT UND BASISSTATION, VORRICHTUNG UND SPEICHERMEDIUM
PROCÉDÉ ET APPAREIL DE COMMUNICATION ENTRE UN TERMINAL ET UNE STATION DE BASE, DISPOSITIF ET SUPPORT DE STOCKAGE

(30) Priority: 31.08.2018 CN 201811008890
(43) Date of publication of application: 09.06.2021
(73) Proprietor: ALIBABA GROUP HOLDING LIMITED, George Town, Grand Cayman (KY)
(72) Inventor: YU, Xiaobo, Zhejiang 311121 (CN); CHEN, Wenbing, Zhejiang 311121 (CN)
(74) Representative: Finnegan Europe LLP
(86) International application number: PCT/CN2019/101915
(87) International publication number: WO 2020/042994

(56) References cited:
- EP-A1- 3 232 696
- CN-A- 105 527 643
- CN-A- 106 413 082
- CN-A- 108 235 386
- US-A1- 2010 110 887
- US-A1- 2015 219 742
- US-A1- 2018 167 982

## Description

The present application claims the priority to a Chinese patent application with the application No. 201811008890.5 filed on August 31, 2018 and entitled "METHOD, APPARATUS, DEVICE, AND STORAGE MEDIUM FOR COMMUNICATION BETWEEN TERMINAL AND BASE STATION".

### Technical Field

The present disclosure relates to the field of communications, and in particular, to a method, an apparatus, a device, and a storage medium for communication between a terminal and a base station.

### Background

In class B of the LoRaWAN specification, a Beacon includes GPS latitude and longitude information. After receiving a Beacon, a terminal can acquire GPS latitude and longitude information of a base station that sends the Beacon. If the terminal detects that the GPS latitude and longitude information has changed, the terminal will actively report a data packet so that a network server can change a route according to the acquired data packet, that is, change a base station through which the network server sends downlink data to the terminal.

However, even GPS latitude and longitude information in Beacons issued by the same base station may be slightly different. While each time the terminal receives a changed Beacon, it uploads an uplink data packet to update the route, which will increase unnecessary power consumption of the terminal and greatly reduce the battery life of the terminal. The route referred to herein is a base station selected by the network server to transmit downlink data to the terminal.

EP 3 232 696 A1 relates to an access point device for a wireless local area network (WLAN), including a plurality of antennas, a transmitter configured to transmit a first beacon signal in a first direction, using at least one of the antennas, and transmit a second beacon signal in a second direction, which is different from the first direction in azimuth and/or elevation, using at least one of the antennas.

US 2015/0219742 A1 relates to a method and network device for improving location accuracy in multi-channel wireless networks. To coordinate with other Access Points and improve location accuracy of client devices, each access point can obtain a schedule of another neighboring access point, switch to the operating channel of the neighboring access point at a scheduled time for communication exchanges between the neighboring access point and the client device, listen to the communication exchanges between the neighboring access point and the client device, collect signal samples, and send the report to the location engine to allow the location engine collect more signal samples associated with the client device, thereby more accurately determine the location of the client device.

### Summary of the Invention

An objective of the present disclosure is to provide a communication scheme between a terminal and a base station that can reduce the power consumption of the terminal.

According to aspects of the present invention there are provided a communication method, a communication apparatus, a computing device, and a machine-readable storage medium as set forth in the appended claims. Other features of the invention will be apparent from the dependent claims, the attached drawings and the description which follows. In the following, when the term "disclosure" relates to embodiments, said term is to be understood as referring to the present invention.

The present disclosure uses geographic location information or a combination of geographic location information and received signal strength information as parameter information for identifying a base station, and determines, by comparing the magnitude of a change between parameter information of a currently received beacon frame and parameter information of a previously received beacon frame, whether the beacon frame received this time and the previously received beacon frame are issued by the same base station, or determines, by comparing whether a base station identifier in the currently received beacon frame is consistent with a base station identifier in the previously received beacon frame, whether the beacon frame received this time and the previously received beacon frame are issued by the same base station. In this way, the accuracy of determination can be improved, and the power consumption of the terminal can be saved. For example, the battery consumption of the terminal can be greatly reduced, and the battery life of the terminal can be improved.

### Brief Description of the Drawings

Through a more detailed description of example embodiments of the present disclosure in conjunction with the accompanying drawings, the above and other objectives, features, and advantages of the present disclosure will become more apparent. In the example embodiments of the present disclosure, identical reference numerals generally represent identical parts.
FIG. 1 is a schematic flowchart illustrating a communication method between a terminal and a base station according to an embodiment of the present disclosure;
Fig. 2 is a schematic flow illustrating the application of the method shown in Fig. 1 in a LoRaWAN scenario;
FIG. 3 is a schematic flowchart illustrating a communication method between a terminal and a base station according to another embodiment of the present invention;
FIG. 4 is a schematic flowchart illustrating a communication method between a terminal and a base station according to another embodiment of the present invention;
FIG. 5 is a schematic flow illustrating the application of the method shown in FIG. 4 in a LoRaWAN scenario;
FIG. 6 is a schematic flowchart illustrating a communication method between a terminal and a base station according to another embodiment of the present invention;
FIG. 7 is a schematic flowchart illustrating a communication method between a terminal and a base station according to another embodiment of the present invention;
FIG. 8 is a schematic block diagram illustrating the structure of a communication apparatus between a terminal and a base station according to an embodiment of the present disclosure; and
FIG. 9 illustrates a schematic structural diagram of a computing device that can be used to implement the above-mentioned communication method between a terminal and a base station according to an embodiment of the present disclosure.

### Detailed Description

Preferred embodiments of the present disclosure will be described in more detail below with reference to the accompanying drawings. The preferred embodiments of the present disclosure are shown in the accompanying drawings; however, it should be understood that the present disclosure can be implemented in various forms and should not be limited by the embodiments described herein. Rather, these embodiments are provided to make the present disclosure more thorough and complete, and to fully convey the scope of the present disclosure to those skilled in the art.

### [Term Explanation]

LoRa: a low-power long-distance wireless transmission scheme based on a spread spectrum technology.
LoRaWAN: LoRa Wide Area Network is a low-power wide-area Internet of Things solution.
NS: Network Server.
BS: Base Station.
Beacon Frame: beacon frame.
GWEUI: a base station extended unique identifier (Gateway Extended Unique Identifier, GWEUI), such as a 64-bit EUI.

Base station identifier list: a list containing parameter information that can distinguish different base stations. The parameter information may be a base station identifier, that is, base station extended unique identifier (Gateway Extended Unique Identifier, GWEUI). In addition, the parameter information may also be at least one of base station location information (or latitude and longitude information) and received signal strength information.

### [Communication method between terminal and base station]

In order to improve the accuracy of determination and save the power consumption of the terminal, the present disclosure proposes that it is possible to use a combination of geographic location information and received signal strength information, or geographic location information, as parameter information for identifying a base station, and determine, by comparing the magnitude of a change between parameter information of a currently received beacon frame and parameter information of a previously received beacon frame, whether the beacon frame received this time and the previously received beacon frame are issued by the same base station. For example, it is possible to determine, by comparing whether a distance between geographic location information of a base station in the currently received beacon frame and geographic location information of a base station in the previously received beacon frame exceeds a first predetermined threshold, whether the beacon frame received this time and the previously received beacon frame are issued by the same base station. For another example, it is also possible to determine, by comparing at the same time whether a distance between the currently received geographic location information and the previously received geographic location information exceeds a first predetermined threshold and whether a difference between received signal strengths of the beacon frames exceeds a second predetermined threshold, whether the currently received beacon frame and the previously received beacon frame are issued by the same base station.

In addition, the present disclosure proposes that it is also possible to determine, by comparing whether a GWEUI in the currently received beacon frame is consistent with a GWEUI in the previously received beacon frame, whether the beacon frame received this time and the previously received beacon frame are issued by the same base station.

Compared with simply comparing whether GPS information in the beacon frame has changed, the determination methods of the present disclosure are more accurate, which can reduce the number of times the terminal sends unnecessary base station update frames, reduce power consumption of the terminal, and extend the service life of the terminal battery.

The implementation processes of the determination methods proposed in the present disclosure are respectively further explained below.

### Method one:

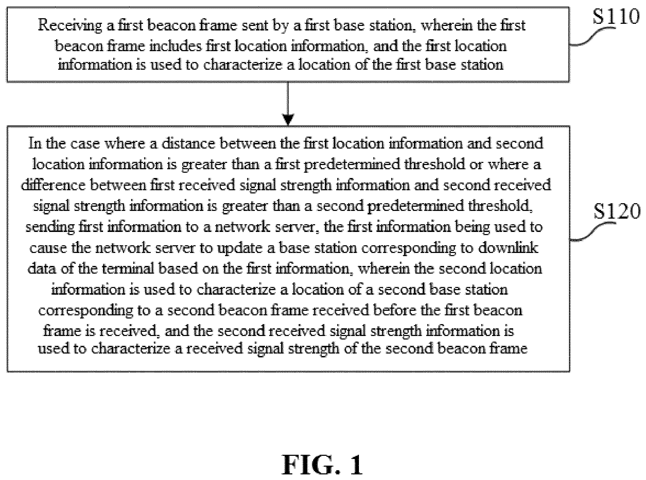

FIG. 1 is a schematic flowchart illustrating a communication method between a terminal and a base station according to an embodiment of the present disclosure. The method shown in FIG. 1 is performed by a terminal.

Referring to FIG. 1, in step S110, a first beacon frame sent by a first base station is received.

In step S120, in the case where a distance between first location information and second location information is greater than a first predetermined threshold or where a difference between first received signal strength information and second received signal strength information is greater than a second predetermined threshold, first information is sent to a network server.

The first beacon frame includes the first location information, and the first location information is used to characterize the location of the first base station. The second location information is used to characterize the location of a second base station corresponding to a second beacon frame received before the first beacon frame is received. The first base station and the second base station may be the same base station or may be different base stations. As an example, the first location information and the second location information may be GPS information of a corresponding base station, such as GPS latitude and longitude information.

The first received signal strength information is used to characterize the received signal strength of the first beacon frame received. The second received signal strength information is used to characterize the received signal strength of the second beacon frame received before the first beacon frame is received. In the present disclosure, both the second received strength information and the second location information can be regarded as parameter information used to identify the second base station corresponding to the second beacon frame received before the first beacon frame is received.

As an example of the present disclosure, before step S 110 is performed, a second beacon frame sent by the second base station is also received, and the second beacon frame includes the second location information. In addition, the second received signal strength information of the second beacon frame can also be recorded.

After the first beacon frame is received, it is possible to determine whether the distance between the first location information and the second location information is greater than a first predetermined threshold, and determine whether the difference between the first received signal strength information and the second received signal strength information is greater than a second predetermined threshold. The specific numerical values of the first predetermined threshold and the second predetermined threshold can be set according to actual conditions, and will not be repeated here.

In the case where the distance between the first location information and the second location information is greater than the first predetermined threshold or where the difference between the first received signal strength information and the second received signal strength information is greater than the second predetermined threshold, it can be considered that the first beacon frame and the second beacon frame are issued by different base stations (that is, the first base station is different from the second base station), and the first information can be sent to the network server at this time.

In other words, in the case where the distance between the first location information and the second location information is not greater than the first predetermined threshold, and the difference between the first received signal strength information and the second received signal strength information is not greater than the second predetermined threshold, it can be considered that the first beacon frame and the second beacon frame are issued by the same base station, that is, the first base station and the second base station are the same base station. Therefore, if the distance between the first location information and the second location information is not greater than the first predetermined threshold, and the difference between the first received signal strength information and the second received signal strength information is not greater than the second predetermined threshold, then the first information is not sent to the network server.

The first information is used to cause the network server to update a base station corresponding to downlink data of the terminal based on the first information. The first information may be an information frame that carries certain data information, such as a base station update request (that is, an uplink route update frame). In addition, the first information may also be an empty packet, and the data content contained in the first information is not limited in the present disclosure. The first information sent may be received by one or more base stations, and forwarded by the one or more base stations to the network server. The network server may update a base station corresponding to downlink data of the terminal according to quality data of the first information received (such as received signal strength indicator (RSSI) and/or signal-to-noise ratio (SNR)). For example, the base station with the largest received signal strength indicator (RSSI) and/or signal-to-noise ratio (SNR) can be selected as the base station corresponding to the downlink data of the terminal.

In an embodiment of the present disclosure, the terminal may maintain a base station identifier list (for the sake of distinction, it may be referred to as a "first base station identifier list"), and the second location information and the second received signal strength information are recorded in the first base station identifier list, for example, they can be recorded, in association, in the first base station identifier list. In the case where the distance between the first location information and the second location information is greater than the first predetermined threshold or where the difference between the first received signal strength information and the second received signal strength information is greater than the second predetermined threshold, it can be considered that the first base station is different from the second base station corresponding to the previously received second beacon frame. At this time, the first location information and the first received signal strength information can be written (which can be written in association) into the first base station identifier list as a base station identifier parameter for identifying the first base station. Therefore, multiple sets of base station identifier parameters respectively used to identify different base stations can be recorded in the first base station identifier list. When a new beacon frame is subsequently received, location information and received signal strength information thereof in the new beacon frame can be respectively compared with each set of base station identifier parameters (i.e., location information and received signal strength information) recorded in the first base station identifier list. If there is no base station identifier parameter for which the difference in location information is less than the first predetermined threshold and the difference in received signal strength is less than the second predetermined threshold in the first base station identifier list, it can be considered that the base station corresponding to the currently received beacon frame is a new base station, and first information can be sent to a network server.

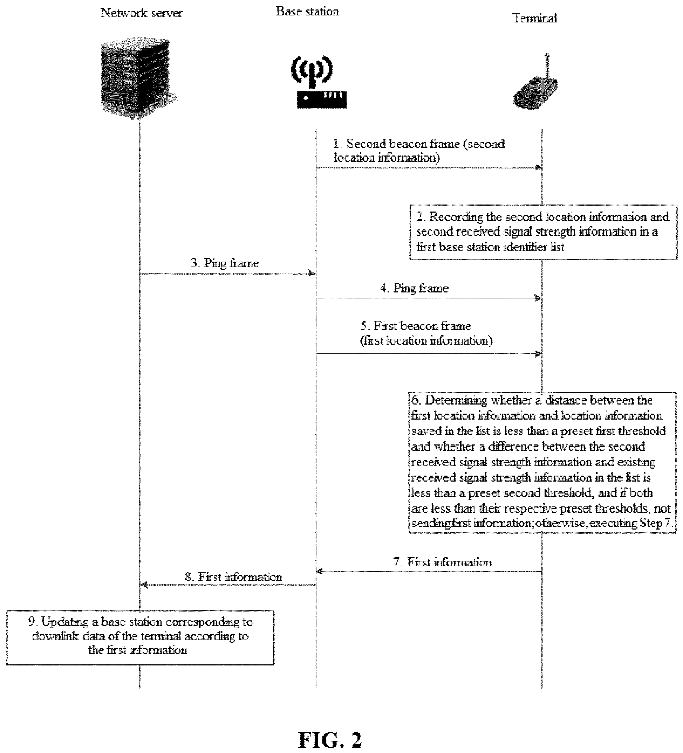

Fig. 2 is a schematic flow illustrating the application of the method shown in Fig. 1 in a LoRaWAN scenario.

The Network server shown in FIG. 2 may be a LoRaWAN server, and the base station (Gateway) may be a LoRa base station. The terminal (End-device) and the network server can communicate based on the LoRaWAN protocol, that is, the terminal can send uplink data to the server through one or more base stations, and the server can also send downlink data to the terminal through one or more base stations. In addition, the distribution of the base stations through which the uplink data passes and the base stations through which the downlink data passes may be or may not be consistent.

In the present disclosure, the terminal (End-device) may be a terminal working in the class B mode of the LoRaWAN protocol. In class B, the base station sends a Beacon every 128 seconds, and the End-device opens a receiving window periodically, which is referred to as a "ping slot," and the downlink communication sent by the network server in the receiving window is referred to as a "ping frame."

As shown in Figure 2: 1. A second base station (Gateway 2) sends a second beacon frame to the terminal working in the class B mode, and the second beacon frame includes second location information used to characterize a location of Gateway 2.

2. The second location information and the second received signal strength information of the second beacon frame received by the terminal are recorded in the first base station identifier list as parameter information for distinguishing the second base station.

3. The network server sends a ping frame to the Gateways.

4. The Gateways send a ping frame to the End-device.

5. The first base station (Gateway 1) sends a first beacon frame to the terminal, and the first beacon frame includes first location information used to characterize a location of Gateway 1.

6. The terminal compares two parameters of the received first beacon frame (the first location information and the first received signal strength information of the first beacon frame) with two parameters in the first base station identifier list. It is determined whether a distance between the first location information and the location information saved in the list (i.e., the second location information) is less than a preset first threshold and whether a difference between the first received signal strength information and the received signal strength information saved in the list (i.e., the second received signal strength information) is less than a preset second threshold. If both are less than their respective preset thresholds, it is considered that the first beacon frame and the second beacon frame are issued by the same base station, and first information is not sent; and if the above-mentioned conditions are not met, step 7 is performed.

7. The terminal sends the first information to the Gateways.

8. The Gateways send the first information to the network server.

9. The network server updates a base station corresponding to downlink data of the terminal according to the first information. For example, the network server may select the Gateway with the strongest received signal as the base station corresponding to the downlink data of the terminal.

Compared with simply comparing whether GPS information in the beacon frame has changed, the determination method based on the magnitude of a change in GPS information proposed in the present disclosure is more accurate, which can reduce the number of times the terminal sends unnecessary base station update frames, reduce power consumption of the terminal, and extend the service life of the terminal battery.

### Method two:

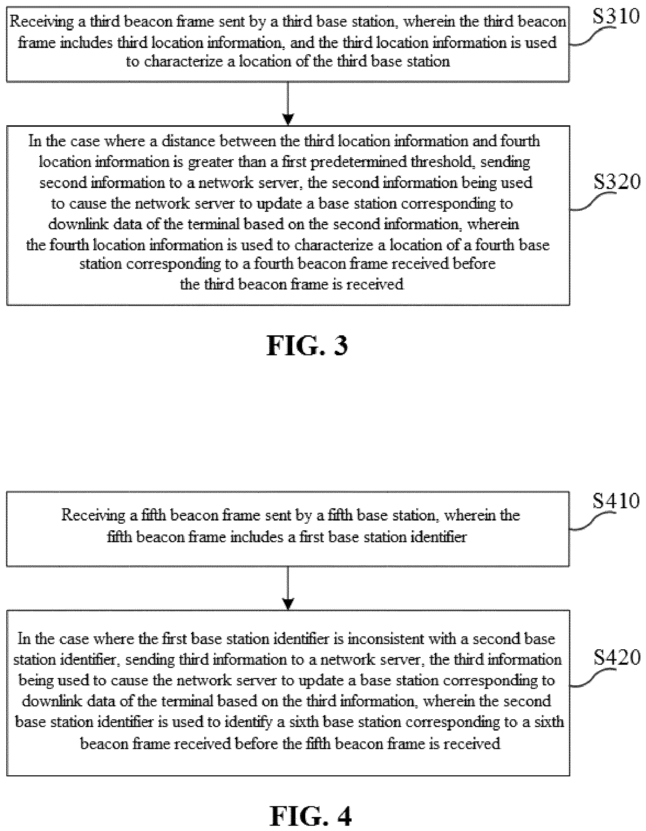

FIG. 3 is a schematic flowchart illustrating a communication method between a terminal and a base station according to another embodiment of the present invention. The method shown in FIG. 3 can be performed by a terminal.

Referring to FIG. 3, in step S310, a third beacon frame sent by a third base station is received.

In step S320, in the case where a distance between third location information and fourth location information is greater than a first predetermined threshold, second information is sent to a network server.

The third beacon frame includes third location information, and the third location information is used to characterize a location of the third base station. The fourth location information is used to characterize a location of a fourth base station corresponding to a fourth beacon frame received before the third beacon frame is received. The third base station and the fourth base station may be the same base station or may be different base stations. As an example, the third location information and the fourth location information may be GPS information of a corresponding base station, such as GPS latitude and longitude information.

As an example of the present disclosure, before step S310 is performed, the fourth beacon frame sent by the fourth base station may also be received, and the fourth beacon frame includes fourth location information.

After the third beacon frame is received, it is possible to determine whether the distance between the third location information and the fourth location information is greater than the first predetermined threshold. The specific numerical value of the first predetermined threshold can be set according to actual conditions, and will not be repeated here.

In the case where the distance between the third location information and the fourth location information is greater than the first predetermined threshold, it can be considered that the third base station is different from the fourth base station, and the second information can be sent to the network server. In other words, in the case where the distance between the third location information and the fourth location information is not greater than the first predetermined threshold, it can be considered that the third beacon frame and the fourth beacon frame are issued by the same base station, that is, the third base station and the fourth base station are the same base station. Therefore, if the distance between the third location information and the fourth location information is not greater than the first predetermined threshold, the second information is not sent to the network server.

The same as the role of the first information described above, the second information is used to cause the network server to update the base station corresponding to the downlink data of the terminal based on the first information. The second information may be an information frame that carries certain data information, such as a base station update request (that is, an uplink route update frame). In addition, the second information may also be an empty packet, and the data content contained in the first information is not limited in the present disclosure. The second information sent may be received by one or more base stations, and forwarded by the one or more base stations to the network server. The network server may update a base station corresponding to downlink data of the terminal according to quality data of the second information received (such as received signal strength indicator (RSSI) and/or signal-to-noise ratio (SNR)). For example, the base station with the largest received signal strength indicator (RSSI) and/or signal-to-noise ratio (SNR) can be selected as the base station corresponding to the downlink data of the terminal.

In an embodiment of the present disclosure, the terminal may maintain a base station identifier list (for the sake of distinction, it may be referred to as a "second base station identifier list"), and the third location information is recorded in the second base station identifier list. In the case where the distance between the third location information and the fourth location information is greater than the first predetermined threshold, it can be considered that the third base station is different from the fourth base station corresponding to the previously received fourth beacon frame. At this time, the third location information can be written into the second base station identifier list as a base station identifier parameter for identifying the third base station. Therefore, a plurality of base station identifier parameters respectively used to identify different base stations can be recorded in the second base station identifier list. In the case where a new beacon frame is subsequently received, the location information in the new beacon frame can be respectively compared with each base station identifier parameter (i.e., location information) recorded in the second base station identifier list. If there is no base station identifier parameter for which the difference in location information is less than a first predetermined threshold in the second base station identifier list, it can be considered that the base station corresponding to the currently received beacon frame is a new base station, and the second information can be sent to the network server, and the location information in the new beacon frame can be written into the second base station identifier list.

### Method three:

FIG. 4 is a schematic flowchart illustrating a communication method between a terminal and a base station according to another embodiment of the present invention. The method shown in FIG. 4 can be performed by a terminal.

Referring to FIG. 4, in step S410, a fifth beacon frame sent by a fifth base station is received.

In step S420, in the case where a first base station identifier is inconsistent with a second base station identifier, third information is sent to a network server.

The fifth beacon frame includes the first base station identifier, and the first base station identifier is used to identify the fifth base station that sends the fifth beacon frame. The second base station identifier is used to identify a sixth base station corresponding to a sixth beacon frame received before the fifth beacon frame is received. The fifth base station and the sixth base station may be the same base station or may be different base stations. The first base station identifier and the second base station identifier may be base station extended unique identifiers (Gateway Extended Unique Identifiers, GWEUIs), such as 64-bit EUIs.

As an example of the present disclosure, before step S410 is performed, the sixth beacon frame sent by the sixth base station may also be received, and the sixth beacon frame includes the second base station identifier.

After receiving the fifth beacon frame, it is possible to determine whether the first base station identifier is consistent with the second base station identifier. If the first base station identifier is consistent with the second base station identifier, it can be considered that the fifth beacon frame and the sixth beacon frame are issued by the same base station, that is, the fifth base station and the sixth base station are the same base station. Therefore, in the case where the first base station identifier is consistent with the second base station identifier, the third information is not sent to the network server. If the first base station identifier is inconsistent with the second base station identifier, it can be considered that the fifth beacon frame and the sixth beacon frame are not issued by the same base station, that is, the fifth base station and the sixth base station are not the same base station. Therefore, in the case where the first base station identifier is inconsistent with the second base station identifier, the third information is sent to the network server.

The same as the role of the first information and the second information described above, the third information is used to cause the network server to update the base station corresponding to the downlink data of the terminal based on the third information. The third information may be an information frame that carries certain data information, such as a base station update request (that is, an uplink route update frame). In addition, the third information may also be an empty packet, and the data content contained in the first information is not limited in the present disclosure. The third information sent may be received by one or more base stations, and forwarded by the one or more base stations to the network server. The network server may update a base station corresponding to downlink data of the terminal according to quality data of the third information received (such as received signal strength indicator (RSSI) and/or signal-to-noise ratio (SNR)). For example, the base station with the largest received signal strength indicator (RSSI) and/or signal-to-noise ratio (SNR) can be selected as the base station corresponding to the downlink data of the terminal.

In an embodiment of the present disclosure, the terminal may maintain a base station identifier list (for the sake of distinction, it may be referred to as a "third base station identifier list"), and the second base station identifier may be recorded in the third base station identifier list. In the case where the first base station identifier is inconsistent with the second base station identifier, it can be considered that the fifth base station is different from the sixth base station. At this moment, the first base station identifier can be written into the third base station identifier list as a base station identifier parameter for identifying the fifth base station. Therefore, a plurality of base station identifier parameters respectively used to identify different base stations can be recorded in the third base station identifier list. In the case where a new beacon frame is subsequently received, a base station identifier in the new beacon frame can be respectively compared with each base station identifier parameter (i.e., base station identifier) recorded in the third base station identifier list. If the base station identifier in the new beacon frame does not appear in the third base station identifier list, it can be considered that the base station corresponding to the currently received beacon frame is a new base station, the third information can be sent to the network server, and the base station identifier in the new beacon frame can be written into the third base station identifier list.

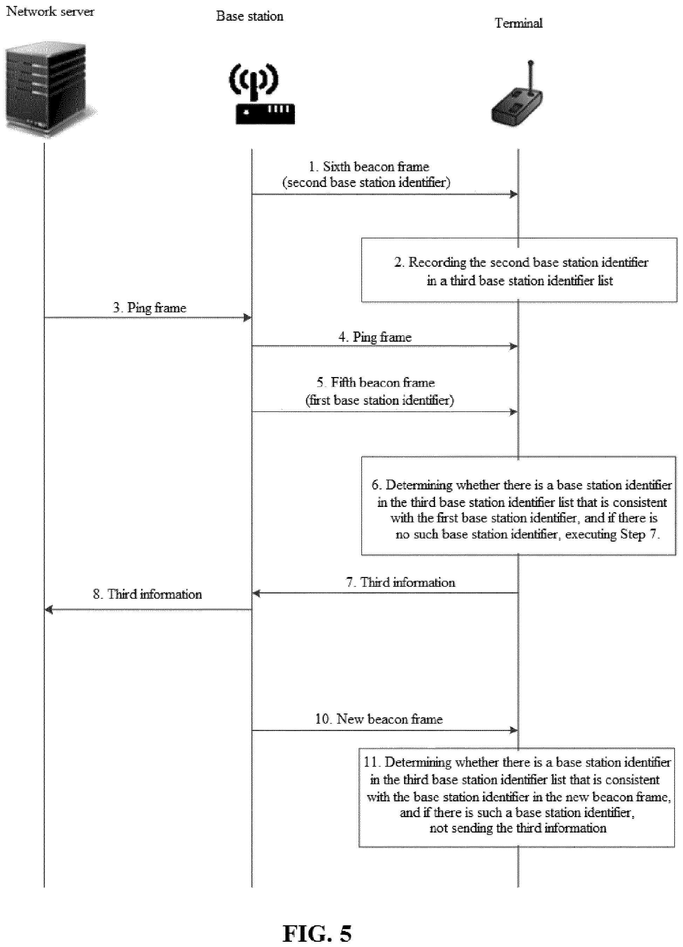

FIG. 5 is a schematic flow illustrating the application of the method shown in FIG. 4 in a LoRaWAN scenario.

The network server shown in FIG. 5 may be a LoRaWAN server, and the base station (Gateway) may be a LoRa base station. The terminal (End-device) and the network server can communicate based on the LoRaWAN protocol, that is, the terminal can send uplink data to the server through one or more base stations, and the server can also send downlink data to the terminal through one or more base stations. In addition, the distribution of the base stations through which the uplink data passes and the base stations through which the downlink data passes may be or may not be consistent.

In the present disclosure, the End-device may be a terminal working in the class B mode of the LoRaWAN protocol. In class B, the base station sends a Beacon every 128 seconds, and the End-device opens a receiving window periodically, which is referred to as a "ping slot," and the downlink communication sent by the network server in the receiving window is referred to as a "ping frame."

As shown in FIG. 5: 1. A sixth base station (Gateway 6) sends a sixth beacon frame to the terminal working in the class B mode, and the sixth beacon frame includes a second base station identifier for identifying the sixth base station.

2. After receiving the sixth beacon frame carrying the second base station identifier, the terminal may record the second base station identifier in the third base station identifier list.

3. The network server sends a ping frame to the Gateways.

4. The Gateways (such as Gateway 6) forward to the End-device a ping frame sent by the network server.

As shown in steps 5 to 9 in FIG. 5, if the fifth base station (Gateway 5) subsequently sends a fifth beacon frame to the terminal working in the class B mode, the fifth beacon frame includes a first base station identifier for identifying the fifth base station. The terminal can determine the first base station identifier carried in the received fifth beacon frame and the second base station identifier in the sixth beacon frame received last time. For example, it is possible to determine whether there is a base station identifier in the third base station identifier list that is consistent with the first base station identifier. If there is such a base station identifier, it indicates that the third information does not need to be sent; and if there is no such base station identifier, the third information needs to be sent, and the first base station identifier can also be written into the third base station identifier list. As an example, the third information sent by the terminal may be sent to the network server through Gateway 1 and/or Gateway 2. The network server may update a base station corresponding to downlink data of the terminal according to the third information. For example, the Gateway with the strongest received signal may be selected as the base station corresponding to the downlink data of the terminal.

As shown in steps 10 to 11 in FIG. 5, if the terminal subsequently receives a new beacon frame, it is possible to determine whether there is a base station identifier in the third base station identifier list that is consistent with the base station identifier in the new beacon frame. If there is such a base station identifier, the third information is not sent; otherwise, the third information is sent. For example, assume that Gateway 6 sends a Beacon frame again to the terminal working in the class B mode, and the Beacon frame carries GWEUI 6 therein. The terminal may compare the GWEUI 6 carried in the received Beacon frame with the GWEUIs in the third base station identifier list, determine that GWEUI 6 is in the third base station identifier list, and does not send the third information.

Compared with simply comparing whether GPS information in the beacon frame has changed, the determination method of the present embodiment through comparison of base station identifiers (GWEUI) is more accurate, which can reduce the number of times the terminal sends unnecessary base station update frames, reduce power consumption of the terminal, and extend the service life of the terminal battery.

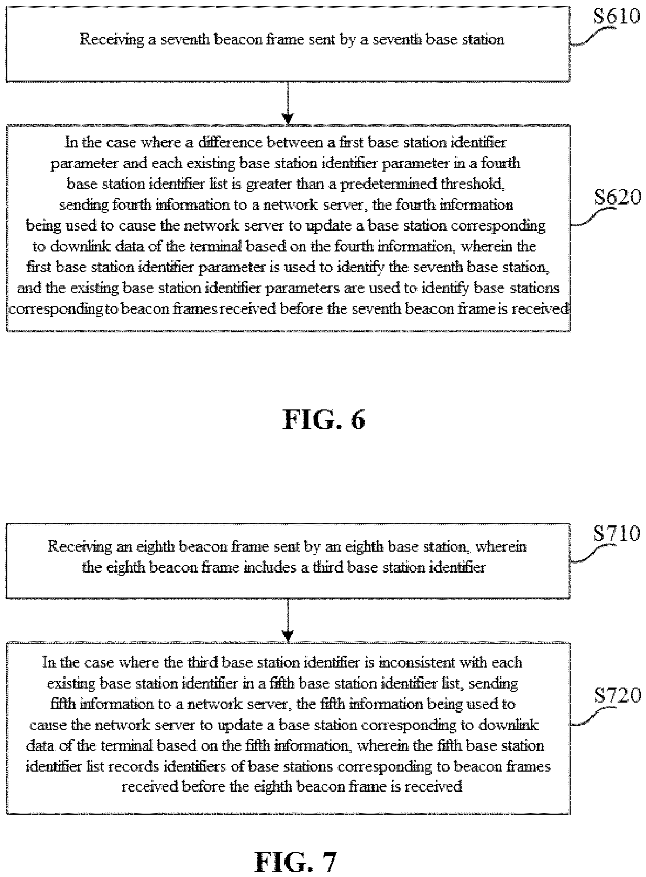

FIG. 6 is a schematic flowchart illustrating a communication method between a terminal and a base station according to another embodiment of the present invention. The method shown in FIG. 6 can be performed by a terminal.

As shown in FIG. 6, in step S610, a seventh beacon frame sent by a seventh base station is received.

In step S620, in the case where a difference between a first base station identifier parameter and each existing base station identifier parameter in a fourth base station identifier list is greater than a predetermined threshold, fourth information is sent to a network server.

The first base station identifier parameter is used to identify the seventh base station. The fourth base station identifier list may include a plurality of existing base station identifier parameters, and each existing base station identifier parameter may be used to characterize a base station corresponding to a beacon frame received before the seventh beacon frame is received. For example, if before the seventh beacon frame is received, beacon frame 1 from base station 1, beacon frame 2 from base station 2, and beacon frame 3 from base station 3 are also received, then the fourth base station identifier list may include base station identifier parameter 1 used to characterize base station 1, base station identifier parameter 2 used to characterize base station 2, and base station identifier parameter 3 used to characterize base station 3.

In the present disclosure, a base station identifier parameter may be location information used to characterize the location of a base station or a combination of the location information used to characterize the location of the base station and received signal strength information used to characterize the received signal strength of the beacon frame sent by the base station.

In the case where the base station identifier parameter is the location information, the seventh beacon frame includes seventh location information used to characterize the seventh base station. The seventh location information can be compared with each existing base station identifier parameter (i.e., existing location information) in the fourth base station identifier list to determine whether there is existing location information in the fourth base station identifier list whose distance to the seventh location information is less than a first predetermined threshold. If there is such existing location information, it indicates that the seventh base station that sends the seventh beacon frame is not a new base station, and then the fourth information is not sent to the network server. If there is no such existing location information, it indicates that the seventh base station that sends the seventh beacon frame is a new base station, and then the fourth information is sent to the network server.

In the case where the base station identifier parameter is a combination of location information and received signal strength information, the seventh beacon frame includes seventh location information used to characterize the seventh base station, and the received signal strength information of the received seventh beacon frame can be recorded (for the sake of distinction, it may be referred to as "third received signal strength information"). The seventh location information and the third received signal strength information can be compared with each set of base station identifier parameters (i.e., location information and received signal strength information) recorded in the fourth base station identifier list. If there is no base station identifier parameter in the fourth base station identifier list for which the difference in location information is less than the first predetermined threshold and the difference in received signal strength is less than the second predetermined threshold, it can be considered that the seventh base station that sends the seventh beacon frame is a new base station, and the fourth information is sent to the network server.

The same as the role of the first information described above, the fourth information is used to cause the network server to update the base station corresponding to the downlink data of the terminal based on the first information. The fourth information may be an information frame that carries certain data information, such as a base station update request (that is, an uplink route update frame). In addition, the fourth information may also be an empty packet, and the data content contained in the fourth information is not limited in the present disclosure. The fourth information sent may be received by one or more base stations, and forwarded by the one or more base stations to the network server. The network server may update a base station corresponding to downlink data of the terminal according to quality data of the fourth information received (such as received signal strength indicator (RSSI) and/or signal-to-noise ratio (SNR)). For example, the base station with the largest received signal strength indicator (RSSI) and/or signal-to-noise ratio (SNR) can be selected as the base station corresponding to the downlink data of the terminal.

FIG. 7 is a schematic flowchart illustrating a communication method between a terminal and a base station according to another embodiment of the present invention. The method shown in FIG. 7 can be performed by a terminal.

Referring to FIG. 7, in step S710, an eighth beacon frame sent by an eighth base station is received, and the eighth beacon frame includes a third base station identifier.

In step S720, in the case where the third base station identifier is inconsistent with each existing base station identifier in a fifth base station identifier list, fifth information is sent to a network server.

The third base station identifier is used to identify the eighth base station that sends the eighth beacon frame. The fifth base station identifier list may include a plurality of existing base station identifiers, and each existing base station identifier may be used to identify a base station corresponding to a beacon frame received before a seventh beacon frame is received. For example, if before the seventh beacon frame is received, beacon frame 1 from base station 1, beacon frame 2 from base station 2, and beacon frame 3 from base station 3 are also received, then the fifth base station identifier list may include existing base station identifier 1 used to identify base station 1, existing base station identifier 2 used to identify base station 2, and existing base station identifier 3 used to identify base station 3. The base station identifiers may be base station extended unique identifiers (Gateway Extended Unique Identifiers, GWEUIs), such as 64-bit EUIs.

After the eighth beacon frame is received, the third base station identifier in the eighth beacon frame can be compared with each existing base station identifier in the base station list. If the third base station identifier is inconsistent with each existing base station identifier in the fifth base station identifier list, that is, the third base station identifier does not appear in the fifth base station identifier list, it can be considered that the eighth base station that sends the eighth beacon frame is a new base station, and the fifth information is sent to the network server. If the third base station identifier appears in the fifth base station identifier list, it can be considered that the eighth base station that sends the eighth beacon frame is not a new base station, and the fifth information is not sent to the network server.

The same as the role of the first information described above, the fifth information is used to cause the network server to update the base station corresponding to the downlink data of the terminal based on the first information. The fifth information may be an information frame that carries certain data information, such as a base station update request (that is, an uplink route update frame). In addition, the fifth information may also be an empty packet, and the data content contained in the fifth information is not limited in the present disclosure. The fifth information sent may be received by one or more base stations, and forwarded by the one or more base stations to the network server. The network server may update a base station corresponding to downlink data of the terminal according to quality data of the fifth information received (such as received signal strength indicator (RSSI) and/or signal-to-noise ratio (SNR)). For example, the base station with the largest received signal strength indicator (RSSI) and/or signal-to-noise ratio (SNR) can be selected as the base station corresponding to the downlink data of the terminal.

### [Communication apparatus]:

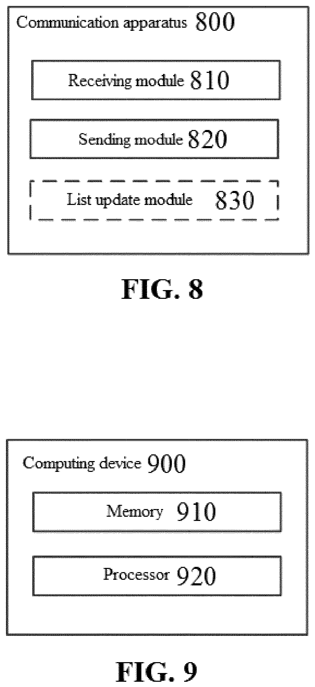

FIG. 8 is a schematic block diagram illustrating the structure of a communication apparatus between a terminal and a base station according to an embodiment of the present disclosure. The apparatus shown in FIG. 8 can be set at a terminal. The functional modules of the communication apparatus can be implemented by hardware, software, or a combination of hardware and software that implements the principle of the present invention. Those skilled in the art can understand that the functional modules described in FIG. 8 can be combined together or divided into sub-modules to implement the principle of the above-mentioned invention. Therefore, the description herein can support any possible combination, or division, or further limitation of the functional modules described herein.

The following briefly describes the functional modules that the communication apparatus can have and the operations that can be performed by each functional module. For the details involved, please refer to the relevant description above, which will not be repeated here.

Referring to FIG. 8, communication apparatus 800 includes receiving module 810 and sending module 820. In addition, list update module 830 shown in the dashed box in the figure may optionally be included.

### Embodiment one:

In this embodiment, receiving module 810 is used to receive a first beacon frame sent by a first base station. The first beacon frame includes first location information, and the first location information is used to characterize a location of the first base station. Sending module 820 is used to, in the case where a distance between the first location information and second location information is greater than a first predetermined threshold, or a difference between first received signal strength information and second received signal strength information is greater than a second predetermined threshold, send first information to a network server, the first information being used to cause the network server to update a base station corresponding to downlink data of the terminal based on the first information, wherein the second location information is used to characterize the location of a second base station corresponding to a second beacon frame received before the first beacon frame is received, and the second received signal strength information is used to characterize a received signal strength of the second beacon frame.

As an example of the present disclosure, before receiving the first beacon frame sent by the first base station, receiving module 810 may further be used to receive the second beacon frame sent by the second base station, and the second beacon frame includes the second location information. The communication apparatus may further include a recording module for recording the second received signal strength information of the second beacon frame.

As another example of the present disclosure, the second location information and the second received signal strength information may be recorded in a first base station identifier list. List update module 830 is used to write (for example, write in association) the first location information and the first received signal strength information into the first base station identifier list in the case where the distance between the first location information and the second location information is greater than the first predetermined threshold or where the difference between the first received signal strength information and the second received signal strength information is greater than the second predetermined threshold.

### Embodiment two:

In this embodiment, receiving module 810 is used to receive a third beacon frame sent by a third base station. The third beacon frame includes third location information, and the third location information is used to characterize the location of the third base station. Sending module 820 is used to, in the case where a distance between the third location information and fourth location information is greater than the first predetermined threshold, send second information to a network server, the second information being used to cause the network server to update a base station corresponding to downlink data of the terminal based on the second information, wherein the fourth location information is used to characterize the location of a fourth base station corresponding to a fourth beacon frame received before the third beacon frame is received.

As an example of the present disclosure, before receiving the third beacon frame sent by the third base station, receiving module 810 is further used to receive the fourth beacon frame sent by the fourth base station, and the fourth beacon frame includes fourth location information.

As another example of the present disclosure, the fourth location information is recorded in a second base station identifier list, and list update module 830 is used to, in the case where the distance between the third location information and the fourth location information is greater than the first predetermined threshold, write the third location information into the second base station identifier list.

### Embodiment three:

In this embodiment, receiving module 810 is used to receive a fifth beacon frame sent by a fifth base station, and the fifth beacon frame includes a first base station identifier. Sending module 820 is used to, in the case where the first base station identifier is inconsistent with a second base station identifier, send third information to a network server, the third information being used to cause the network server to update a base station corresponding to downlink data of the terminal based on the third information, wherein the second base station identifier is used to identify a sixth base station corresponding to a sixth beacon frame received before the fifth beacon frame is received.

As an example of the present disclosure, receiving module 810 is further used to, before receiving the fifth beacon frame sent by the fifth base station, receive the sixth beacon frame sent by the sixth base station, and the sixth beacon frame includes the second base station identifier.

As another example of the present disclosure, the second base station identifier is recorded in a third base station identifier list, and list update module 830 is used to write the first base station identifier into the third base station identifier list in the case where the first base station identifier is inconsistent with the second base station identifier.

### Embodiment four:

In this embodiment, receiving module 810 is used to receive a seventh beacon frame sent by a seventh base station. Sending module 820 is used to, in the case where a difference between a first base station identifier parameter and each existing base station identifier parameter in a fourth base station identifier list is greater than a predetermined threshold, send fourth information to a network server, the fourth information being used to cause the network server to update a base station corresponding to downlink data of the terminal based on the fourth information, wherein the first base station identifier parameter is used to identify the seventh base station, and the existing base station identifier parameters are used to identify base stations corresponding to beacon frames received before the seventh beacon frame is received.

### Embodiment five:

In this embodiment, receiving module 810 is used to receive an eighth beacon frame sent by an eighth base station, and the eighth beacon frame includes a third base station identifier. Sending module 820 is used to, in the case where the third base station identifier is inconsistent with each existing base station identifier in a fifth base station identifier list, send fifth information to a network server, the fifth information being used to cause the network server to update a base station corresponding to downlink data of the terminal based on the fifth information, wherein the fifth base station identifier list records identifiers of base stations corresponding to beacon frames received before the eighth beacon frame is received.

### [Computing Device]:

FIG. 9 illustrates a schematic structural diagram of a computing device that can be used to implement the above-mentioned communication method between a terminal and a base station according to an embodiment of the present disclosure.

Referring to FIG. 9, computing device 900 includes memory 910 and processor 920.

Processor 920 may be a multi-core processor, or may include a plurality of processors. In some embodiments, processor 920 may include a general-purpose main processor and one or more special co-processors, for example, a graphics processing unit (GPU), a digital signal processor (DSP), and so on. In some embodiments, processor 920 may be implemented using a customized circuit, for example, an Application Specific Integrated Circuit (ASIC) or a Field Programmable Gate Array (FPGA).

Memory 910 may include various types of storage units, for example, a system memory, a read only memory (ROM), and a permanent storage device. The ROM may store static data or instructions required by processor 920 or other modules of the computer. The permanent storage device may be a read-write storage device. The permanent storage device may be a non-volatile storage device that does not lose stored instructions and data even after the computer is powered off. In some embodiments, the permanent storage device adopts a large-capacity storage device (for example, a magnetic or optical disk and a flash memory) as the permanent storage device. In other embodiments, the permanent storage device may be a removable storage device (for example, a floppy disk and an optical drive). The system memory may be a read-write storage device or a volatile read-write storage device, for example, a dynamic random access memory. The system memory can store some or all of the instructions and data required by the processor at runtime. In addition, memory 910 may include any combination of computer-readable storage media, including various types of semiconductor memory chips (DRAMs, SRAMs, SDRAMs, flash memories, and programmable read-only memories), and magnetic disks and/or optical disks may also be used. In some embodiments, memory 910 may include a removable storage device that can be read and/or written, for example, a compact disk (CD), a read-only digital versatile disk (for example, a DVD-ROM, a dual-layer DVD-ROM, etc.), a read-only Blu-ray disk, a ultra-density disk, a flash memory card (for example, an SD card, a min SD card, a Micro-SD card, etc.), a magnetic floppy disk, etc. The computer-readable storage media do not include carrier waves and transient electronic signals transmitted in a wireless or wired manner.

Memory 910 stores executable code, which, when processed by processor 920, may cause processor 920 to execute the communication method between a terminal and a base station described above.

The method, apparatus, and device for communication between a terminal and a base station according to the present disclosure have been described in detail above with reference to the accompanying drawings.

In addition, the method according to the present disclosure can also be implemented as a computer program or a computer program product which includes computer program code instructions for performing various steps defined in the above-mentioned method of the present disclosure.

Alternatively, the present disclosure may also be implemented as a non-transitory machine-readable storage medium (or a computer-readable storage medium, or a machine-readable storage medium) on which executable code (or computer programs, or computer instruction code) is stored. When executed by a processor of an electronic device (or a computing device, a server, etc.), the executable code (or the computer programs, or the computer instruction code) causes the processor to perform various steps of the above-mentioned method according to the present disclosure.

Those skilled in the art will also understand that various example logic blocks, modules, circuits, and algorithm steps described in conjunction with the present disclosure can be implemented as electronic hardware, computer software, or a combination of both.

The flowcharts and block diagrams in the accompanying drawings show the architectures, functions, and operations of possible implementations of the system and method according to multiple embodiments of the present disclosure. In this regard, each block in the flowcharts or block diagrams may represent a module, a program segment, or a part of the code, and the module, the program segment, or the part of the code contains one or more executable instructions for implementing specified logical functions. It should also be noted that in some alternative implementations, the functions marked in the blocks may also occur in a different order than that marked in the accompanying drawings. For example, two consecutive blocks can actually be performed in parallel, or they can sometimes be performed in the reverse order, depending on the functions involved. It should also be noted that each block in the block diagrams and/or flowcharts and a combination of the blocks in the block diagrams and/or flowcharts can be implemented by a dedicated hardware-based system that performs the specified functions or operations, or can be implemented by a combination of dedicated hardware and computer instructions.

The embodiments of the present disclosure have been described above, and the above description is exemplary. Many modifications and variations will be apparent to those of ordinary skill in the art without departing from the scope of the appended claims. The choice of terms used herein is intended to best explain the principles, practical applications, or improvements to technologies in the market of the embodiments, or to enable others of ordinary skill in the art to understand the embodiments disclosed herein. It is intended that the scope of the invention should only be limited by the appended claims.

## Claims

1. A communication method comprising:
receiving (S110), by a mobile terminal, a first beacon frame sent by a first base station and having first signal strength information, the first beacon frame comprising first location information characterizing a first location of the first base station;
receiving, by the mobile terminal prior to receiving the first beacon frame, a second beacon frame sent by a second base station and having second signal strength information, the second beacon frame comprising second location information characterizing a second location of the second base station;
determining one or more of a distance between the first location and the second location and a difference between a first signal strength indicated by the received first signal strength information and a second signal strength indicated by the received second signal strength information; and
in response to one of a determination that the distance is greater than a first predetermined threshold or a determination that the difference is greater than a second predetermined threshold, sending (S120), by the mobile terminal and via one of the first and second base stations, first information to a network server, the first information being used to cause the network server to update a base station that transmits downlink data to the mobile terminal.

2. The communication method according to claim 1, further comprising recording the second received signal strength information of the second beacon frame.

3. The communication method according to claim 1, wherein the second location information and the second received signal strength information are recorded, by the mobile terminal, in a first base station identifier list, and the method further comprises:
in response to determining that the distance is greater than the first predetermined threshold or that the difference is greater than the second predetermined threshold, writing the first location information and the first received signal strength information into the first base station identifier list.

4. The communication method according to any preceding claim, further comprising:
in response to determining that the distance is not greater than the first predetermined threshold and that the difference is not greater than the second predetermined threshold, not sending, by the terminal, the first information to the network server.

5. A communication apparatus (800) for communication, comprising:
a receiving module (810) configured to receive a beacon frame sent by a base station; and
a sending module (820) configured to send information to a network server, the information being used to cause the network server to update a base station that transmits downlink data to the mobile terminal,
wherein the receiving module (810) and the sending module (820) are configured to perform the method according to any one of claims 1 to 4.

6. A machine-readable storage medium having executable code stored thereon, wherein the executable code, when executed by a processor of an electronic device, causes the processor to perform the method according to any one of claims 1 to 4.

## Patentansprüche

1. Kommunikationsverfahren, umfassend:
Empfangen (S110) eines ersten Beacon-Frames durch ein mobiles Endgerät, der von einer ersten Basisstation gesendet wird und erste Signalstärkeinformationen aufweist, wobei der erste Beacon-Frame erste Standortinformationen umfasst, die einen ersten Standort der ersten Basisstation charakterisieren;
Empfangen vor dem Empfangen des ersten Beacon-Frames, eines zweiten Beacon-Frames durch das mobile Endgerät, der durch eine zweite Basisstation gesendet wird und zweite Signalstärkeinformationen aufweist, wobei der zweite Beacon-Frame zweite Standortinformationen umfasst, die einen zweiten Standort der zweiten Basisstation charakterisieren;
Bestimmen von einem oder mehreren von einer Entfernung zwischen der ersten Position und der zweiten Position und einer Differenz zwischen einer ersten Signalstärke, die durch die empfangene erste Signalstärkeinformation angegeben wird, und einer zweiten Signalstärke, die durch die empfangene zweite Signalstärkeinformation angegeben wird; und
als Reaktion auf eines von einer Bestimmung, dass die Entfernung größer als ein erster vorbestimmter Schwellenwert ist, oder einer Bestimmung, dass die Differenz größer als ein zweiter vorbestimmter Schwellenwert ist, Senden (S120) von ersten Informationen durch das mobile Endgerät und über eine von der ersten und der zweiten Basisstation an einen Netzwerkserver, wobei die ersten Informationen verwendet werden, um den Netzwerkserver zu veranlassen, eine Basisstation zu aktualisieren, die Downlink-Daten an das mobile Endgerät überträgt.

2. Kommunikationsverfahren gemäß Anspruch 1, ferner umfassend Aufzeichnen der zweiten empfangenen Signalstärkeinformationen des zweiten Beacon-Frames.

3. Kommunikationsverfahren gemäß Anspruch 1, wobei die zweiten Standortinformationen und die zweiten empfangenen Signalstärkeinformationen durch das mobile Endgerät in einer ersten Basisstationsidentifikatorliste aufgezeichnet werden und das Verfahren ferner umfasst:
als Reaktion auf das Bestimmen, dass die Entfernung größer als der erste vorbestimmte Schwellenwert ist oder dass die Differenz größer als der zweite vorbestimmte Schwellenwert ist, Schreiben der ersten Standortinformationen und der ersten empfangenen Signalstärkeinformationen in die erste Basisstationsidentifizierungsliste.

4. Kommunikationsverfahren nach einem der vorhergehenden Ansprüche, ferner umfassend:
als Reaktion auf das Bestimmen, dass die Entfernung nicht größer als der erste vorbestimmte Schwellenwert ist und dass die Differenz nicht größer als der zweite vorbestimmte Schwellenwert ist, nicht Senden der ersten Informationen durch das Endgerät an den Netzwerkserver.

5. Kommunikationseinrichtung (800) zur Kommunikation, umfassend:
ein Empfangsmodul (810), das konfiguriert ist, um einen von einer Basisstation gesendetes Beacon-Frame zu empfangen; und
ein Sendemodul (820), das konfiguriert ist, um Informationen an einen Netzwerkserver zu senden, wobei die Informationen verwendet werden, um den Netzwerkserver zu veranlassen, eine Basisstation zu aktualisieren, die Downlink-Daten an das mobile Endgerät überträgt,
wobei das Empfangsmodul (810) und das Sendemodul (820) konfiguriert sind, um das Verfahren gemäß einem der Ansprüche 1 bis 4 durchzuführen.

6. Maschinenlesbares Speichermedium mit darauf gespeichertem ausführbaren Code, wobei der ausführbare Code, wenn er durch einen Prozessor einer elektronischen Vorrichtung ausgeführt wird, den Prozessor dazu veranlasst, das Verfahren gemäß einem der Ansprüche 1 bis 4 durchzuführen.

## Revendications

1. Procédé de communication comprenant :
la réception (S110), par un terminal mobile, d'une première trame de balise envoyée par une première station de base et comportant des premières informations d'intensité de signal, la première trame de balise comprenant des premières informations de localisation caractérisant une première localisation de la première station de base ;
la réception, par le terminal mobile avant la réception de la première trame de balise, d'une seconde trame de balise envoyée par une seconde station de base et comportant des secondes informations d'intensité de signal, la seconde trame de balise comprenant des secondes informations de localisation caractérisant une seconde localisation de la seconde station de base ;
la détermination d'une ou plusieurs d'une distance entre la première localisation et la seconde localisation et d'une différence entre une première intensité de signal indiquée par les premières informations d'intensité de signal reçues et une seconde intensité de signal indiquée par les secondes informations d'intensité de signal reçues ; et
en réponse à l'une d'une détermination que la distance est supérieure à un premier seuil prédéterminé ou d'une détermination que la différence est supérieure à un second seuil prédéterminé, l'envoi (S120), par le terminal mobile et via l'une des première et seconde stations de base, de premières informations à un serveur réseau, les premières informations étant utilisées pour amener le serveur réseau à mettre à jour une station de base qui transmet des données de liaison descendante au terminal mobile.

2. Procédé de communication selon la revendication 1, comprenant en outre l'enregistrement des secondes informations d'intensité de signal reçues de la seconde trame de balise.

3. Procédé de communication selon la revendication 1, dans lequel les secondes informations de localisation et les secondes informations d'intensité de signal reçues sont enregistrées, par le terminal mobile, dans une première liste d'identifiants de station de base, et le procédé comprend en outre :
en réponse à la détermination que la distance est supérieure au premier seuil prédéterminé ou que la différence est supérieure au second seuil prédéterminé, l'écriture des premières informations de localisation et des premières informations d'intensité de signal reçues dans la première liste d'identifiants de station de base.

4. Procédé de communication selon l'une quelconque des revendications précédentes, comprenant en outre :
en réponse à la détermination que la distance n'est pas supérieure au premier seuil prédéterminé et que la différence n'est pas supérieure au second seuil prédéterminé, le fait de ne pas envoyer, par le terminal, les premières informations au serveur réseau.

5. Appareil de communication (800) destiné à une communication, comprenant :
un module de réception (810) configuré pour recevoir une trame de balise envoyée par une station de base ; et
un module d'envoi (820) configuré pour envoyer des informations à un serveur réseau, les informations étant utilisées pour amener le serveur réseau à mettre à jour une station de base qui transmet des données de liaison descendante au terminal mobile,
dans lequel le module de réception (810) et le module d'envoi (820) sont configurés pour exécuter le procédé selon l'une quelconque des revendications 1 à 4.

6. Support de stockage lisible par machine sur lequel est stocké un code exécutable, dans lequel le code exécutable, lorsqu'il est exécuté par un processeur d'un dispositif électronique, amène le processeur à exécuter le procédé selon l'une quelconque des revendications 1 à 4.
